Europäisches Patentamt

European Patent Office

Office européen des brevets

(11) Publication number: **0 191 477**
A2

# EUROPEAN PATENT APPLICATION

(21) Application number: 86101783.8

(51) Int. Cl.⁴: **C 08 B 37/16**

(22) Date of filing: 12.02.86

(30) Priority: 14.02.85 JP 25197/85

(71) Applicant: **Japan Liquid Crystal Co., Ltd., 10-3, Honkomagome 2-chome Bunkyo-ku, Tokyo (JP)**

(43) Date of publication of application: 20.08.86 Bulletin 86/34

(72) Inventor: **Shibanai, Ichiro, LO-6-312, Akasaka 6-chome Minato-ku, Tokyo (JP)**

(74) Representative: **Goddar, Heinz J., Dr. et al, FORRESTER & BOEHMERT Widenmayerstrasse 4/I, D-8000 München 22 (DE)**

(84) Designated Contracting States: **DE FR GB IT NL SE**

(54) Nonreducing sugar-containing cyclodextrin and process for the preparation thereof.

(57) The present invention relates to a nonreducing sugar-containing cyclodextrin which is prepared by incorporating cyclodextrin with chemically stable nonreducing sugars and a process for the preparation thereof. A clathrate compound prepared from this nonreducing sugar-containing cyclodextrin hardly changes its properties and exhibits an enhanced dispersibility when added to other substances. A representative example of the nonreducing sugar-containing cyclodextrin which can be obtained by this process is a cyclodextrin-containing reduced malt syrup.

EP 0 191 477 A2

Title of the Invention

NONREDUCING SUGAR-CONTAINING CYCLODEXTRIN

AND PROCESS FOR THE PREPARATION THEREOF

Background of the Invention

Field of the Invention:

The present invention relates to a nonreducing sugar-containing cyclodextrin obtained by incorporating cyclodextrin with a chemically stable nonreducing sugar and a process for the preparation thereof.

Description of the Prior Art:

Processes have been developed wherein various substances which are unstable chemically or physically are protected or stabilized by forming a clathrate compound thereof with cyclodextrin and the resulting clathrate compounds are added to other substances (products) as liquid or powder for their utilization.

Cyclodextrin is generally prepared from starch which is one of sugars by the action of microorganisms or enzymes derived therefrom. Up to this time, the use of cyclodextrin has caused the following disadvantages.

(1) When a highly pure dextrin which has been separated and purified from an aqueous solution containing not only cyclodextrin but also other dextrin or the

- 1 -

like is used, the cost is increased and the clathrate compound derived from such a highly pure cyclodextrin tends to crystallize each other, so that the dispersibility of the clathrate compound is too lowered to disperse the clathrate compound into other substances homogeneously.

(2) When a so-called cyclodextrin-containing malt syrup prepared from a starch solution is used, dextrins other than cyclodextrin act as a dispersing agent. However, since they contain reducing sugars such as glucose, maltose, maltotriose or the like, the use of the above malt syrup involves not only the addition of cyclodextrin clathrate compound but also the addition of reducing sugars containing a functional carbonyl group (an aldehyde or keto group) which causes an amino carbonyl reaction or the like to lower the quality of a final product.

Summary of the Invention

The present invention relates to a nonreducing sugar-containing cyclodextrin which is prepared by reducing an aqueous solution containing cyclodextrin and reducing sugars according to an ordinary method to thereby convert the reducing sugars into the corresponding nonreducing sugars (for example, sugar alcohols or the like) and thus contains only nonreducing

- 2 -

sugars as sugar component and a process for the preparation thereof.

Detailed Description of Preferred Embodiments

In the present invention, the term "cyclodextrin" refers to $\alpha$-, $\beta$- and $\gamma$-cyclodextrins and mixtures thereof.

In the present invention, the term "nonreducing sugar" refers to sugars not containing a carbonyl group such as an aldehyde or keto group. Generally, alcohols corresponding to hexoses, pentoses or oligosaccharides are used as a nonreducing sugar to be added to cyclodextrin.

The aqueous solution containing a cyclodextrin and reducing sugars to be used in the present invention generally comprises a so-called cyclodextrin-containing malt syrup which is prepared by the action of a cyclodextrin-generating bacterium or enzyme on a starch solution and contains cyclodextrin, reducing sugars glucose, maltose, maltotriose or the like), nonreducing sugars and the like, though not limited thereto. That is to say, not only sugars derived from starch but also any solution containing cyclodextrin and reducing sugars (for example, hexoses, pentoses or the like), which may further contain nonreducing sugars, can be used.

An aqueous solution containing a cyclodextrin and reducing sugars (i.e. a cyclodextrin-containing malt syrup) can be reduced into a cyclodextrin-containing reduced malt syrup with the reduction of the reducing sugars into the corresponding sugar alcohols, for example, according to a process wherein a cyclodextrin-containing malt syrup having a solid content of 50% (comprising 15% of cyclodextrin and 25% of reducing sugar (DE)) is hydrogenated in the presence of a nickel catalyst at 120°C under a hydrogen gas pressure of 200 kg/cm$^2$ to reduce the DE to zero (or at most 10).

As described above, the nonreducing sugar-containing cyclodextrin and the process for the preparation thereof according to the present invention have the following advantages.

(1) A cyclodextrin-containing reduced malt syrup which is in the form suitable for use can be easily obtained without the necessity of purification of cyclodextrin, so that the cost is reduced, thus widening the field of application.

(2) A clathrate compound prepared from the nonreducing sugar-containing cyclodextrin of the present invention does not change its properties when added to other substances and can prevent side reactions.

(3) A clathrate compound prepared from the nonreducing sugar-containing cyclodextrin of the present invention can be easily dispersed homogeneously when added to other substances.

(4) A substance included in the clathrate compound prepared from the nonreducing sugar-containing cyclodextrin of the present invention can be stably protected for a long period.

The features disclosed in the foregoing description, in the claims and/or in the accompanying drawings may, both separately and in any combination thereof, be material for realising the invention in diverse forms thereof.

What is claimed is:

1.   A nonreducing sugar-containing cyclodextrin comprising only nonreducing sugars as a sugar other than cyclodextrin.

2.   A nonreducing sugar-containing cyclodextrin as set forth in claim 1, wherein the nonreducing sugar is one derived from starch.

3.   A process for the preparation of a nonreducing sugar-containing cyclodextrin, which comprises reducing an aqueous solution containing cyclodextrin and reducing sugars by an ordinary method.

4.   A process for the preparation of a nonreducing sugar-containing cyclodextrin as set forth in claim 3, wherein the nonreducing sugar is one derived from starch.

5.   A process for the preparation of a nonreducing sugar-containing cyclodextrin, which comprises mixing cyclodextrin with nonreducing sugars.